# EUROPEAN PATENT APPLICATION

(11) **EP 4 753 318 A1**
(43) Date of publication of application: **03.06.2026**
(21) Application number: 23946699.8
(22) Date of filing: 26.07.2023
(51) Int. Cl.: H04W 24/04, H04W 36/06, H04W 36/36

(54) **TERMINAL, WIRELESS COMMUNICATION METHOD, AND BASE STATION**

(71) Applicant: NTT DOCOMO, INC., Tokyo 100-6150 (JP)
(72) Inventor: OKUMURA, Mamoru, Tokyo 100-6150 (JP); MATSUMURA, Yuki, Tokyo 100-6150 (JP); HARADA, Hiroki, Tokyo 100-6150 (JP); WANG, Jing, Beijing 100190 (CN)
(74) Representative: Hoffmann Eitle
(86) International application number: PCT/JP2023/027419
(87) International publication number: WO 2025/022617

(57) **Abstract**

A terminal according to an aspect of the present disclosure includes: a transmitting section that transmits a potential cell switch command indicating there is a possibility for cell switch to be performed; and a control section that switches a serving cell to a target cell indicated in the potential cell switch command. An aspect of the present disclosure enables cell switch to be appropriately performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is under study that L1L2-triggered mobility (LTM) defined in Rel. 18 is used when a terminal (user terminal, User Equipment (UE)) moves between cells. Employment of Rel-18 LTM enables an interruption time of cell switch to be shortened.

However, even if Rel-18 LTM is employed, cell switch may not be normally performed in a case where a UE moves between cells and where L1-reference signal received power (L1-RSRP) of a serving cell suddenly falls in a period from cell switch decision to cell switch command reception. Thus, communication throughput in movement between cells may be reduced.

In view of this, an object of the present disclosure is to provide a terminal, a radio communication method, and a base station that enable cell switch to be appropriately performed. Solution to Problem

A terminal according to an aspect of the present disclosure includes: a transmitting section that transmits a potential cell switch command indicating there is a possibility for cell switch to be performed; and a control section that switches a serving cell to a target cell indicated in the potential cell switch command.

### Advantageous Effects of Invention

An aspect of the present disclosure enables cell switch to be appropriately performed.

### Brief Description of Drawings

[FIG. 1] FIG. 1 is a diagram to show an example of LTM under study for Rel. 18.
[FIG. 2] FIG. 2 is a diagram to show features of CHO, DAPS, and Rel-18 LTM (R18 LTM).
[FIG. 3] FIG. 3A is a diagram to show an example of UE movement in urban areas. FIG. 3B is a diagram to show changes in L1-RSRP for PCI #1 and PCI #3, corresponding to FIG. 3A.
[FIG. 4] FIG. 4A is a diagram to show an example of a case where a UE goes through a tunnel. FIG. 4B is a diagram to show changes in L1-RSRP for PCI #1 and PCI #3, corresponding to FIG. 4A.
[FIG. 5] FIG. 5A is a diagram to show an example of a case where a UE moves between cells of low earth orbit (LEO). FIG. 5B is a diagram to show changes in L1-RSRP for PCI #1 and PCI #3, corresponding to FIG. 5A.
[FIG. 6] FIG. 6 is a diagram to show a procedure from transmission of a potential cell switch command to cell switch.
[FIG. 7] FIG. 7 is a diagram to show an example of a schematic structure of a radio communication system according to one embodiment.
[FIG. 8] FIG. 8 is a diagram to show an example of a structure of a base station according to one embodiment.
[FIG. 9] FIG. 9 is a diagram to show an example of a structure of a user terminal according to one embodiment.
[FIG. 10] FIG. 10 is a diagram to show an example of a hardware structure of the base station and the user terminal according to one embodiment.
[FIG. 11] FIG. 11 is a diagram to show an example of a vehicle according to one embodiment.

### Description of Embodiments

### (Conditional Handover (CHO))

Conditional handover (CHO) in Rel. 16 or later versions will be described. CHO is applied to non-terrestrial networks (NTNs), for example. For NTNs, in order for a UE to perform CHO to a candidate cell, the following additional trigger conditions are supported.
- radio resource management (RRM) measurement-based event A4
- time-based trigger condition
- location-based trigger condition

The time-based or location-based trigger condition is configured together with any one of measurement-based trigger conditions (CHO events A3/A4/A5 to be described later below) all the time. How a UE evaluates the time-based or location-based trigger condition together with the RRM measurement-based event depends on the UE implementation.

### (Reporting Configuration (ReportConfigNR))

In ReportConfigNR being an RRC information element, criteria for triggering of an NR measurement reporting event, CHO, conditional PSCell addition (CPA), a conditional PSCell change (CPC) event, or a Layer 2 UE-to-Network (L2U2N) relay measurement reporting event are defined. For an event labelled AN (N is 1, 2) as below, a measurement reporting event, CHO, CPA, and a CPC event are based on cell measurement results derived based on an SS/PBCH block or CSI-RS. Note that "serving," "neighbour," and "PCell/PSCell" may be interpreted as measurement results (such as L1-RSRP/L1-SINR) of a serving cell, a neighbouring cell, and a PCell/PSCell, respectively.

Event A1: Serving becomes better than an absolute threshold.
Event A2: Serving becomes worse than the absolute threshold.
Event A3: Neighbour becomes amount of offset better than PCell/PSCell.
Event A4: Neighbour becomes better than the absolute threshold.
Event A5: PCell/PSCell becomes worse than an absolute threshold 1 and neighbour/SCell becomes better than another absolute threshold 2.
Event A6: A neighbouring cell becomes with amount of offset larger than that of an SCell.

Event D1: A distance between a UE and a reference location (referenceLocation1) becomes longer than a configured threshold (distanceThreshFromReference1) and a distance between the UE and a reference location (referenceLocation2) becomes shorter than a configured threshold (distanceThreshFromReference2).
Conditional Event A3: Conditional reconfiguration candidate becomes amount of offset better than PCell/PSCell.
Conditional Phenomenon A4: Conditional reconfiguration candidate becomes better than the absolute threshold.
Conditional Phenomenon A5: PCell/PSCell becomes worse than the absolute threshold 1 and conditional reconfiguration candidate becomes better than the other absolute threshold 2.
Condition Event D1: A distance between a UE and the reference location (referenceLocation1) becomes longer than the configured threshold (distanceThreshFromReference1) and a distance between the UE and the reference location (referenceLocation2) of conditional reconfiguration candidate becomes shorter than the configured threshold (distanceThreshFromReference2).
Condition Event T1: A time measured by a UE exceeds a configured threshold t1-Threshold and is shorter than t1-Threshold+duration.
Event X1: A UE of a serving L2U2N relay becomes worse than the absolute threshold 1 and an NR cell becomes better than the other absolute threshold 2.
Event X2: A UE of a serving L2U2N relay becomes worse than the absolute threshold.
   For event I1, a measurement reporting event is based on a cross link interference (CLI) measurement result, which is derived based on SRS-RSRP or CLI-RSSI.
Event I1: Interference becomes higher than the absolute threshold.

### (L1L2-triggered Mobility (LTM) in Rel. 18)

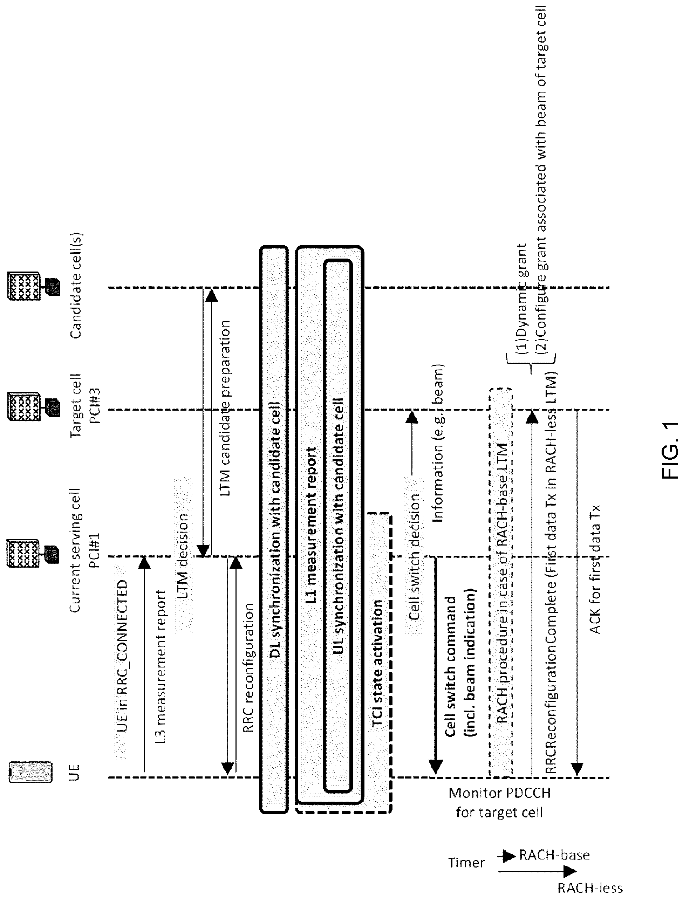

FIG. 1 is a diagram to show an example of LTM under study for Rel. 18. A UE performs RRC connection with respect to a current serving cell (PCI #1) and transmits an L3 measurement report. Based on the L3 measurement report, the serving cell (base station) decides to perform LTM and performs preparation for the LTM with candidate cell(s). The UE and the serving cell perform RRC reconfiguration. Note that the candidate cell(s) may include a target cell (PCI #3).

The UE, serving cell, target cell, and candidate cell(s) perform DL synchronization. The UE performs L1 (for example, L1-RSRP/SINR) measurement of the serving cell / candidate cell(s) / target cell for reporting. The UE, serving cell, target cell, and candidate cell(s) perform UL synchronization.

Based on the L1 measurement report, the serving cell decides to perform serving cell switch to the target cell (PCI #3) and transmits a cell switch command to the UE. After reception of the cell switch command, the UE initiates PDCCH monitoring for the target cell.

In a case of RACH-base LTM, the UE performs an RACH procedure for the target cell. In a case of RACH-less LTM, the UE transmits an RRC reconfiguration completion message and transmits first data to the target cell. The transmission of the first data is performed based on a dynamic grant or on a configured grant associated with a beam of the target cell. The target cell transmits, to the UE, ACK for the transmission.

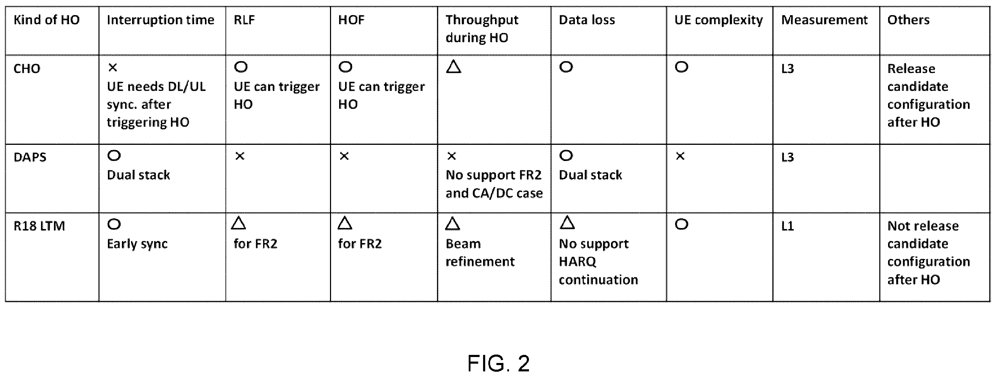

FIG. 2 is a diagram to show features of CHO, DAPS, and Rel-18 LTM (R18 LTM). As shown in FIG. 2, Rel-18 LTM has a feature that the interruption time is short as compared with CHO and Dual active protocol stack based handover (DAPS). However, for Rel-18 LTM, radio link failure (RLF) and hand over failure (HOF) may be difficult, especially in FR2, in some cases.

### (Mobility Scenarios)

### <Scenario 1>

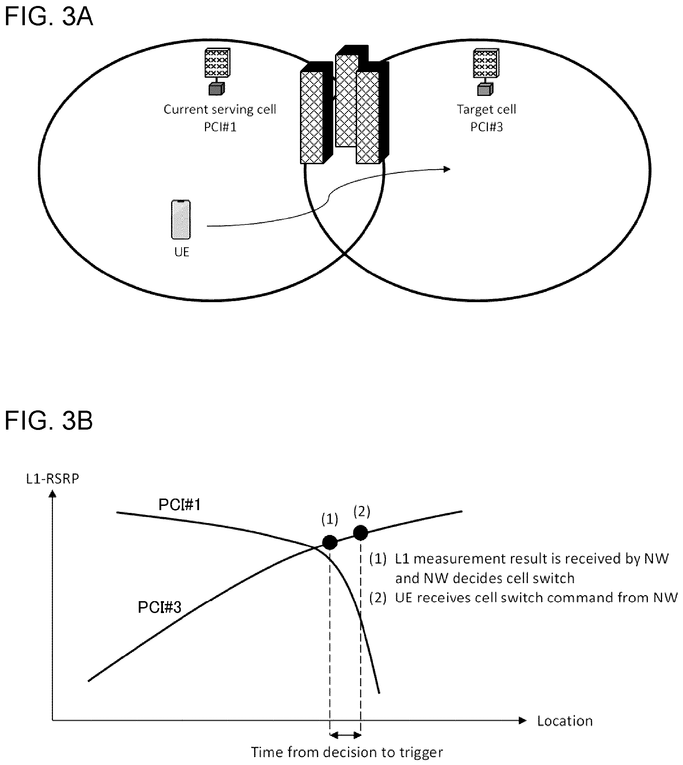

FIG. 3A is a diagram to show an example of UE movement in urban areas. FIG. 3B is a diagram to show changes in L1-RSRP for PCI #1 and PCI #3, corresponding to FIG. 3A. In a case of FR2, there are frequent dynamic channel changes, and thus L1-RSRP may suddenly fall due to the influence of buildings and the like, especially in urban areas. Thus, Non-Line Of Site (NLOS) and the like occur frequently.

In the example of FIG. 3A, a UE moves from a cell of PCI #1 (current serving cell) to a cell of PCI #3 (target cell). In this case, for example, in a case where an NW receives an L1 measurement result at (1) of FIG. 3B and detects a fall in L1-RSRP, the NW decides cell switch. Then, at (2), the NW transmits a cell switch command to the UE. However, at (2), L1-RSRP of PCI #1 is low, and thus the UE may not be able to normally receive the cell switch command.

### <Scenario 2>

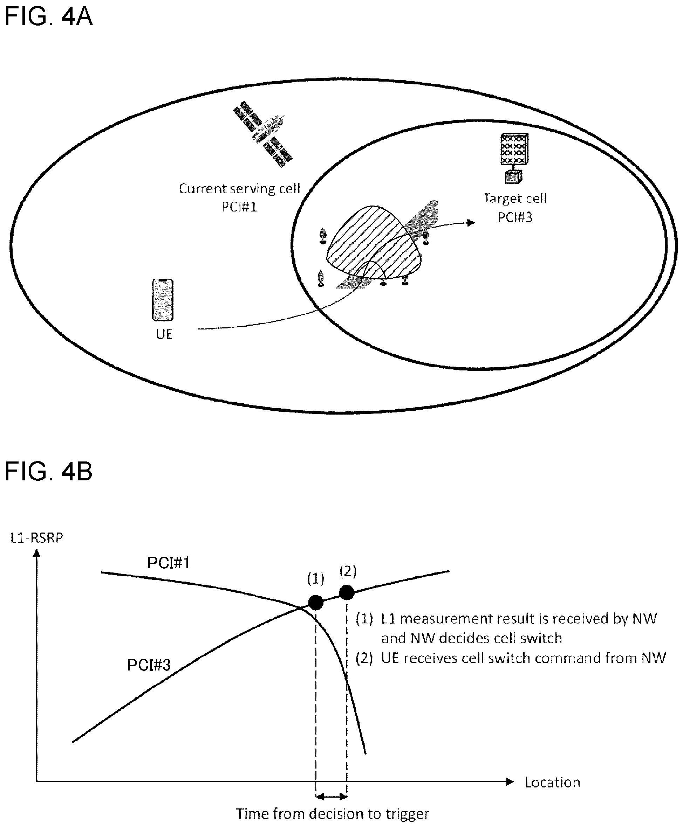

FIG. 4A is a diagram to show an example of a case where a UE goes through a tunnel. FIG. 4B is a diagram to show changes in L1-RSRP for PCI #1 and PCI #3, corresponding to FIG. 4A. When the UE goes through a tunnel or enters a room, L1-RSRP may suddenly fall, causing Non-Line Of Site (NLOS) and the like. In this case, similarly to Scenario 1, L1-RSRP of PCI #1 suddenly falls, and thus the UE may not be able to normally receive the cell switch command.

### <Scenario 3>

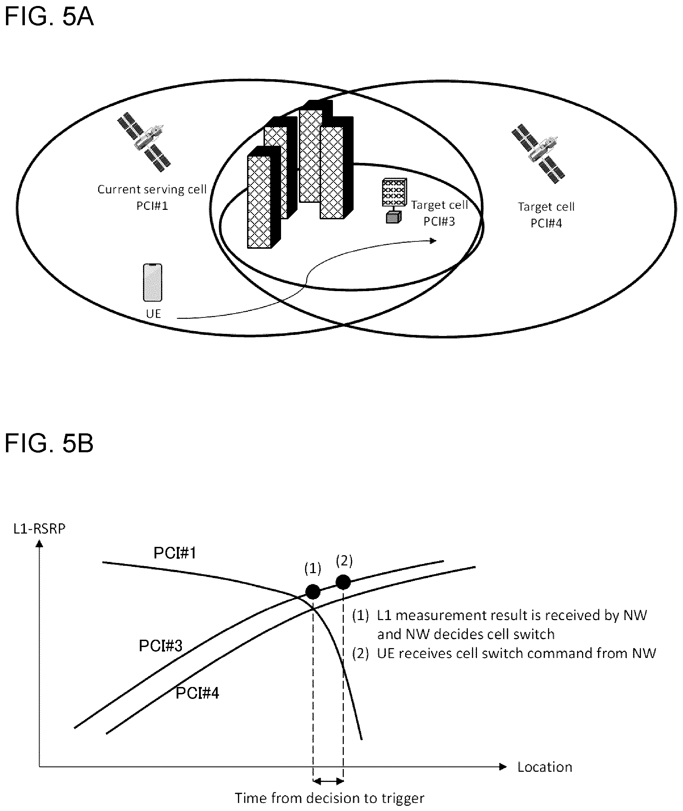

FIG. 5A is a diagram to show an example of a case where a UE moves between cells of low earth orbit (LEO). FIG. 5B is a diagram to show changes in L1-RSRP for PCI #1 and PCI #3, corresponding to FIG. 5A. For LEO, the angle of elevation is low, and thus NLOS and the like may be caused due to the influence of buildings and the like. The example of FIG. 5A assumes a case that both non-terrestrial networks (NTNs) such as LEO and terrestrial networks (TNs) such as PCI #3 exist. In this case also, similarly to Scenario 1, L1-RSRP of PCI #1 suddenly falls, and thus the UE may not be able to normally receive the cell switch command. This similarly applies to a case of both TN-NTN (PCI #1 - PCI #3) mobility and NTN-NTN (PCI #1 - PCI #4) mobility.

### (Analysis)

As described above, employment of Rel-18 LTM enables an interruption time of cell switch to be shortened. In contrast, in a case of CHO, L3 measurement is used, and thus triggering of HO in an appropriate timing for FR2 may be difficult in some cases. In addition, in the case of CHO, a UE requires UL/DL synchronization after triggering HO, and thus the interruption time is longer than that of LTM.

However, even if Rel-18 LTM is employed, cell switch may not be normally performed in a case where a UE moves between cells and where L1-RSRP of a serving cell suddenly falls in a period from cell switch decision to cell switch command reception. Thus, communication throughput in movement between cells may be reduced.

In view of this, the inventors of the present invention came up with the idea of a method that enables cell switch to be appropriately performed.

### (Various Interpretations, etc.)

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a base station, a gNB, and a network (NW) may be interchangeably interpreted.

In the present disclosure, a cell group, a serving cell group, a master cell group (MCG), and a secondary cell group (SCG) may be interchangeably interpreted. L1/L2, L1/L2 signaling, and DCI / MAC CE may be interchangeably interpreted. A serving cell may be replaced with a cell where a PDSCH is transmitted. A candidate cell may mean a cell of candidate to be a serving cell by L1/L2 inter-cell mobility. L1L2-triggered mobility (LTM) and L1/L2 inter-cell mobility may be interchangeably interpreted.

In the present disclosure, a cell, a PCI, a serving cell, a source serving cell, a source cell, a CC, a BWP, a BWP in a CC, and a band may be interchangeably interpreted. In the present disclosure, a cell, a PCI, a cell of additional PCI, an additional cell, another cell, a non-serving cell, a cell with a different PCI, a candidate cell, a candidate serving cell, a cell with a PCI different from a PCI of a current serving cell, a different serving cell, and a target cell may be interchangeably interpreted. A target cell may be a cell selected from among a plurality of candidate cells. In the present disclosure, switch, change, and update may be interchangeably interpreted. A serving cell may be interpreted as a serving cell before switch or a serving cell after switch.

In the present disclosure, a potential cell switch command and a request/indication of a potential cell switch command may be interchangeably interpreted. A cell switch command in the present disclosure may be transmitted from an NW to a UE by L1/L2 (DCI / MAC CE).

### (Radio Communication Method)

In the following embodiments, a UE/NW triggers potential cell switch before a cell switch command, allowing RLF of a source cell of LTM to be avoided. Note that, for the "potential cell switch command" in the present disclosure, another name may be used. A new potential cell switch command triggers counting down / timer for cell switch, but the command does not trigger the cell switch directly. Actual cell switch may be decided by a UE/NW after transmission/reception of new potential cell switch.

This allows the UE to know, before receiving a cell switch command, that there is a possibility of cell switch to a target cell. As described above, the cell switch command may not be received by the UE in a case where RLF occurs (a case where L1-RSRP falls). In this case, with any existing technique, the UE is not able to perform cell switch.

In a case of UE-Distribution Unit (DU), in decision of cell switch, a source DU requires adjustment with a target DU (for example, beam). Taking a lot of time for such adjustment may lead RLF. Meanwhile, the present disclosure enables the adjustment to be performed from a potential cell switch command until cell switch.

### <First Embodiment>

### {Embodiment 1-1}

Before receiving a cell switch command, a UE receives, from an NW, by using DCI / MAC CE / RRC or the like, a potential cell switch command indicating there is a possibility for cell switch to be performed. Then, in a case where a specific condition is satisfied, the UE performs cell switch after a certain time. The cell switch may mean switching of a serving cell to a candidate cell / target cell indicated in the potential cell switch command (initiating transmission and reception to and from the target cell). Operations after reception of the potential cell switch command are described in detail in a second embodiment later below.

A transmission method of the potential cell switch command may be similar to a transmission method of a cell switch command. The UE may receive the potential cell switch command from a serving cell or from candidate cells / candidate cell group.

Regarding a timing (condition) for the UE to receive the potential cell switch command in DL, at least one of the following Options 1-1 to 1-5 may be employed. Note that, at least before receiving a cell switch command, the UE receives the potential cell switch command.

Option 1-1: The UE receives the potential cell switch command after completion of DL synchronization of the target cell.

Option 1-2: The UE receives the potential cell switch command after completion of L1 measurement reporting (CSI reporting) for the target cell.

Option 1-3: The UE receives the potential cell switch command after completion of UL synchronization of the target cell.

Option 1-4: The UE may receive the potential cell switch command at any timing.

Option 1-5: The UE may receive the potential cell switch command, based on a DL measurement result (for example, L1-RSRP/SINR or the like) of a source cell. In a case where the measurement result of the source cell received from the UE (for example, L1-RSRP/SINR included in the CSI reporting, or the like) is worse (lower) than a certain threshold, the NW may transmit the potential cell switch command to the UE. For example, in a case where the measurement result is worse (lower) than the certain threshold in a certain period or where the measurement result worse (lower) than the certain threshold is detected a certain number of times, the NW may transmit the potential cell switch command to the UE. Being worse than a threshold may be notified from a physical layer to a MAC layer or may be counted by a counter in the MAC layer.

In Option 1-5, the DL measurement result of a candidate cell may be used. In this case, in the above-described example, "worse (lower) than a certain threshold" may be interpreted as "better (higher) than the certain threshold." Alternatively, DL measurement results of both the source cell and the candidate cell may be used. For example, in a case where the measurement result of the source cell received from the UE is worse (lower) than a certain threshold and the measurement result of the candidate cell is better (higher) than the certain threshold, the NW may transmit the potential cell switch command to the UE. Alternatively, in a case where the measurement result of the source cell received from the UE is worse (lower) than the measurement result of the candidate cell, the NW may transmit the potential cell switch command to the UE.

### {Embodiment 1-2}

Before receiving a cell switch command, a UE may transmit, to an NW, by using UCI / MAC CE / RRC or the like, a potential cell switch command (a request/indication of a potential cell switch command) indicating there is a possibility for cell switch to be performed. Thereafter, the UE may receive, from the NW, a response for the request/indication. Then, in a case where a specific condition is satisfied, the UE performs cell switch. The cell switch may mean switching of a serving cell to a candidate cell / target cell indicated in the potential cell switch command (initiating transmission and reception to and from the target cell). Operations after transmission of the potential cell switch command are described in detail in the second embodiment later below.

The potential cell switch command may be an L1 measurement report (CSI report), event trigger report, or the like, or may be included in the L1 measurement report (CSI report) or event trigger report. An event in the event trigger report may be an event defined in the reporting configuration (ReportConfigNR) described above, or may be another event.

At least before receiving a cell switch command, the UE transmits the potential cell switch command.

Regarding operations of the UE when the UE transmits the potential cell switch command to the NW, at least one of the following Options 1-1 to 1-3 may be employed.

Option 1-1: The UE transmits the potential cell switch command together with an L1 measurement report (CSI report). The L1 measurement report (CSI report) may correspond to at least one of one or more candidate cells and source cells.

Option 1-2: The UE transmits the potential cell switch command together with a TA report acquired by UE-based TA measurement.

Option 1-3: The UE transmits the potential cell switch command on a resource indicated by DCI. The DCI may be DCI for a UL grant (for example, DCI format 0_0, 0_1, or 0_2) or may be other DCI. In the DCI, a new field may be added (for example, 1: potential cell switch command, 0: other).

Regarding a timing (condition) for the UE to transmit the potential cell switch command to the NW, at least one of the following Options 2-1 to 2-4 may be employed.

Option 2-1: The UE transmits the potential cell switch command after completion of UL synchronization of the target cell.

Option 2-2: The UE transmits the potential cell switch command after completion of L1 measurement reporting (CSI reporting) for the target cell.

Option 2-3: The UE transmits the potential cell switch command after reception of specific RRC signaling for this function to be enabled.

Option 2-4: The UE may transmit the potential cell switch command to the NW, based on a DL measurement result (for example, L1-RSRP/SINR or the like) of a source cell. In a case where the measurement result of the source cell (for example, L1-RSRP/SINR included in the CSI reporting, or the like) is worse (lower) than a certain threshold, the UE may transmit the potential cell switch command. For example, in a case where the measurement result is worse (lower) than the certain threshold in a certain period or where the measurement result worse (lower) than the certain threshold is detected a certain number of times, the UE may transmit the potential cell switch command. Being worse than a threshold may be notified from a physical layer to a MAC layer or may be counted by a counter in the MAC layer.

In Option 2-4, the DL measurement result of a candidate cell may be used. In this case, in the above-described example, "worse (lower) than a certain threshold" may be interpreted as "better (higher) than the certain threshold." Alternatively, DL measurement results of both the source cell and the candidate cell may be used. For example, in a case where the measurement result of the source cell is worse (lower) than a certain threshold and the measurement result of the candidate cell is better (higher) than the certain threshold, the UE may transmit the potential cell switch command to the NW. Alternatively, in a case where the measurement result of the source cell is worse (lower) than the measurement result of the candidate cell, the UE may transmit the potential cell switch command to the NW.

The UE may transmit the potential cell switch command to a serving cell or to candidate cells / candidate cell group.

In a case where the UE transmits the potential cell switch command to a candidate cell, for UL scrambling, a cell radio network temporary identifier (C-RNTI) different from a C-RNTI of a serving cell may be used. Such a C-RNTI is used for scrambling of a CRC of a PDCCH (DCI) from the candidate cell, scrambling of data (information bit) of PDSCH/PUCCH/PUSCH, and the like. The UE may use a timing advance (TA) different from a TA for the serving cell.

### {Contents of Potential Cell Switch Command}

With respect to contents of the potential cell switch command for DL (Embodiment 1-1), at least one of the following Options 1 to 3 may be employed.

Option 1: Contents of the potential cell switch command may be similar to contents of a cell switch command in Rel. 18. For example, a UE may distinguish whether a received command corresponds to the cell switch command or potential cell switch command, based on RRC signaling.

Option 2: With use of a certain field (for example, reserve (R) field) (1 bit) in a cell switch command (MAC CE), whether the MAC CE is the cell switch command or potential cell switch command may be indicated.

Option 3: New signaling may be employed for the potential cell switch command, and contents thereof may be similar to contents of the cell switch command in Rel. 18. A MAC CE is employed for the cell switch command, whereas a MAC CE or DCI / RRC signaling may be employed for the potential cell switch command, for example.

Contents of the potential cell switch command may include at least one of a target cell ID, a DL/UL BWP for the target cell, a TA value for the target cell, and a TCI state ID(s) for one or more target cells.

With respect to the potential cell switch command for UL (Embodiment 1-2), new signaling is introduced. For contents of the potential cell switch command for UL, contents the same as that of the potential cell switch command for DL may be used or part of that for DL may be omitted.

### {Operation Procedure}

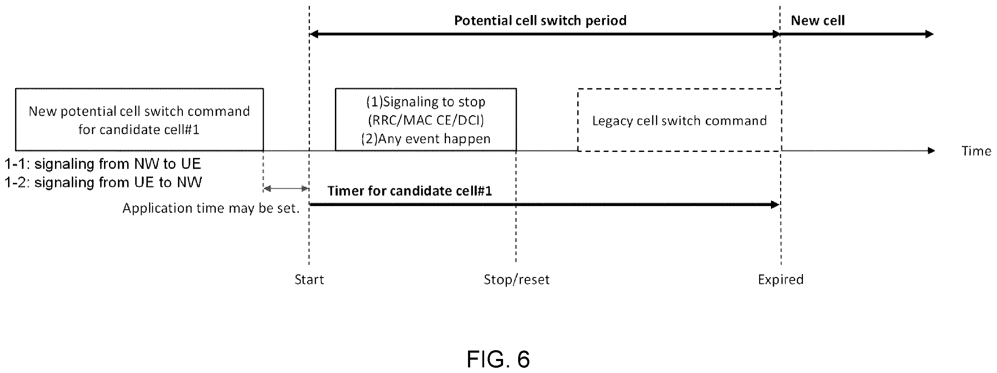

FIG. 6 is a diagram to show a procedure from transmission of a potential cell switch command to cell switch. In a case of switch from a serving cell to candidate cell #1, in the method of Embodiment 1-1 or 1-2, the potential cell switch command is transmitted to a UE/NW and a timer (potential cell switch period) for candidate cell #1 starts. When the timer expires, the serving cell is switched to a new cell (candidate cell #1). Note that, in a case where a stop indication is transmitted to the UE/NW by using RRC / MAC CE / DCI or the like during the timer running or where a specific event occurs, the timer is stopped or reset. In this case, no cell switch is performed.

According to the first embodiment, for example, the potential cell switch command is transmitted/received before transmission/reception of a cell switch command, allowing cell switch to be performed even in a case where L1-RSRP suddenly falls. For example, the UE receives the potential cell switch command at the timing of (1) in FIGS. 3B, 4B, or 5B, allowing cell switch to be performed even in a case where the UE is not able to receive any cell switch command due to a fall in L1-RSRP of the source cell at the timing of (2).

### <Second Embodiment>

With respect to operations of the UE after reception (Embodiment 1-1)/transmission (Embodiment 1-2) of the potential cell switch command, any option of the following may be employed.

Option 1-1: The UE starts a timer for potential cell switch. The timer is configured/indicated, for the UE, by using RRC / MAC CE for all the candidate cells / per candidate cell / per candidate cell group.

Option 1-2: The UE stores information of the potential cell switch command.

After reception/transmission of the potential cell switch command, before the timer expires (expires), the UE may receive some signaling or may encounter an event.

For example, with respect to operations of the UE in a case where the UE receives, during the potential cell switch period (during the timer running), a different potential cell switch command corresponding to a different candidate cell, at least one of the following Options 2-1 to 2-3 may be employed.

Option 2-1: The UE stops/resets the timer running for potential cell switch. In this case, the UE may keep timers for all the candidate cells.

Option 2-2: The UE starts a timer for potential cell switch with respect to a different candidate cell. In this case, the UE may keep a timer per cell. Whether the UE is able to keep the timers for the cells and the maximum number of the timers may be configured by higher layer signaling, may be defined in a specification, or may be determined based on a UE capability.

Option 2-3: The UE does not assume to receive/transmit (does not receive/transmit) any different potential cell switch command for any different candidate cell, during the potential cell switch period (during the timer running).

With respect to operations of the UE in a case where the UE receives, during the potential cell switch period (during the timer running), a cell switch command, at least one of the following Options 3-1 to 3-2 may be employed.

Option 3-1: The UE stops/resets the timer for potential cell switch, deletes/outputs, from a buffer, information of the target cell indicated in the potential cell switch, and follows the cell switch command.

Option 3-2: The UE does not assume to receive (does not receive) any cell switch command during the potential cell switch period (during the timer running).

The UE may perform/decide actual cell switch in a case where at least one of the following Options 4-1 to 4-3 occurs. The cell switch may mean switching of a serving cell to a target cell indicated in the potential cell switch command (initiating transmission and reception to and from the target cell).

Option 4-1: A timer corresponding to potential cell switch expires (has expired).

Option 4-2: A case where a specific event occurs or a specific condition is satisfied. The specific event/condition may be, for example, at least one of events/conditions indicated in the reporting configuration (ReportConfigNR) described above, or may be another event/condition.

Option 4-3: A case where a next target cell is made clear by information of a higher layer (such as Mobility as a Service (MaaS) or Core Network (CN)) from the NW.

The UE may stop/reset the timer for potential cell switch and decide not to perform cell switch (not to trigger cell switch), in at least one case of the following Option 5-1 or 5-2.

Option 5-1: A case where the UE receives a specific signal (DCI / MAC CE / RRC) indicating cancellation of potential cell switch (cell switch).

Option 5-2: A case where a specific event occurs (for example, a case where a timer for a TA of a target cell indicated by the potential cell switch expires).

After actual cell switch based on the potential cell switch command (in a case where the UE triggers cell switch), at least one of the following Options 6-1 to 6-4 may be performed.

Option 6-1: The UE transmits a PRACH to the target cell.

Option 6-2: The UE transmits any UL signal to the target cell.

Option 6-3: The UE initiates monitoring of a PDCCH from the target cell. Alternatively, the UE initiates reception of any DL signal from the target cell.

Option 6-4: The UE stops transmission/reception from the source cell.

Note that, in a case where the UE stops/resets the timer and triggers no cell switch, information indicated by the potential cell switch command may be flashed (deleted/output from a buffer).

The timer for the potential cell switch command may not be configured. In this case, an application timing of cell switch (slot/symbol/ms) may be configured/indicated, for the UE, by using higher layer signaling / physical layer signaling, may be defined in a specification, or may be based on UE capability information.

The second embodiment enables operations such as performing or cancellation of cell switch to be appropriately performed after potential cell switch command reception/transmission.

### {Variations}

In a case where a UE performs, after transmission/reception of the potential cell switch command, movement such as returning to a source cell, for example, the communication environment (L1-RSRP) of the source cell may be improved again. In this case, the UE may stop/reset the timer and decide not to trigger cell switch. "not to trigger cell switch" and "not to perform cell switch" may be interchangeably interpreted.

Specifically, in a case where the measurement result of the source cell (for example, L1-RSRP/SINR included in the CSI reporting, or the like) is better (higher) than a certain threshold after transmission/reception of the potential cell switch command, the UE may stop/reset the timer and decide not to trigger cell switch. For example, in a case where the measurement result is better (higher) than the certain threshold in a certain period or where the measurement result better (higher) than the certain threshold is detected a certain number of times, the UE may stop/reset the timer and decide not to trigger cell switch. Being better than a threshold may be notified from a physical layer to a MAC layer or may be counted by a counter in the MAC layer.

Regarding a condition for the UE to stop/reset the timer after transmission/reception of the potential cell switch command and not to trigger cell switch, a DL measurement result of a candidate cell may be used. In this case, in the above-described example using the measurement result of the source cell, "better (higher) than a certain threshold" may be interpreted as "worse (lower) than the certain threshold." Alternatively, DL measurement results of both the source cell and the candidate cell may be used. For example, in a case where the measurement result of the source cell is better (higher) than the certain threshold and the measurement result of the candidate cell is worse (lower) than the certain threshold, the UE may stop/reset the timer and decide not to trigger cell switch. Alternatively, in a case where the measurement result of the source cell is better (higher) than the measurement result of the candidate cell, the UE may stop/reset the timer and decide not to trigger cell switch.

The variation described above enables communication in the source cell to be continued in a case where, after transmission/reception of the potential cell switch command, movement such as returning to the source cell is made, for example.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:
- supporting of specific processing/operation/control/information for at least one of the above-described embodiments
- supporting of transmission/reception of the potential cell switch command
- supporting of cell switch by L1/L2
- timer time corresponding to the potential cell switch command

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of cell switch by the potential cell switch command, any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Note)

Regarding one embodiment of the present disclosure, the following supplementary notes of the invention will be given.

### {Supplementary Note 1}

A terminal including:
a receiving section that receives a potential cell switch command indicating there is a possibility for cell switch to be performed; and
a control section that switches a serving cell to a target cell indicated in the potential cell switch command.

### {Supplementary Note 2}

The terminal according to supplementary note 1, wherein
the receiving section receives the potential cell switch command after completion of downlink (DL) synchronization of the target cell, after completion of channel state information (CSI) reporting for the target cell, or after completion of uplink (UL) synchronization of the target cell.

### {Supplementary Note 3}

The terminal according to supplementary note 1 or 2, wherein
the control section switches the serving cell to the target cell in a case where a timer corresponding to the potential cell switch expires.

### {Supplementary Note 4}

The terminal according to any one of supplementary notes 1 to 3, wherein
the control section decides not to perform cell switch in a case where a specific signal indicating cancellation of potential cell switch is received or where a specific event occurs.

### (Supplementary Note)

Further, regarding one embodiment of the present disclosure, the following supplementary notes of the invention will be given.

### {Supplementary Note 1}

A terminal including:
a transmitting section that transmits a potential cell switch command indicating there is a possibility for cell switch to be performed; and
a control section that switches a serving cell to a target cell indicated in the potential cell switch command.

### {Supplementary Note 2}

The terminal according to supplementary note 1, wherein
the transmitting section transmits the potential cell switch command after completion of uplink (UL) synchronization of the target cell, after completion of channel state information (CSI) reporting for the target cell, or after reception of specific radio resource control (RRC) signaling.

### {Supplementary Note 3}

The terminal according to supplementary note 1 or 2, wherein
the control section switches the serving cell to the target cell in a case where a timer corresponding to the potential cell switch expires.

### {Supplementary Note 4}

The terminal according to any one of supplementary notes 1 to 3, wherein
the control section decides not to perform cell switch in a case where a specific signal indicating cancellation of potential cell switch is received or where a specific event occurs.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

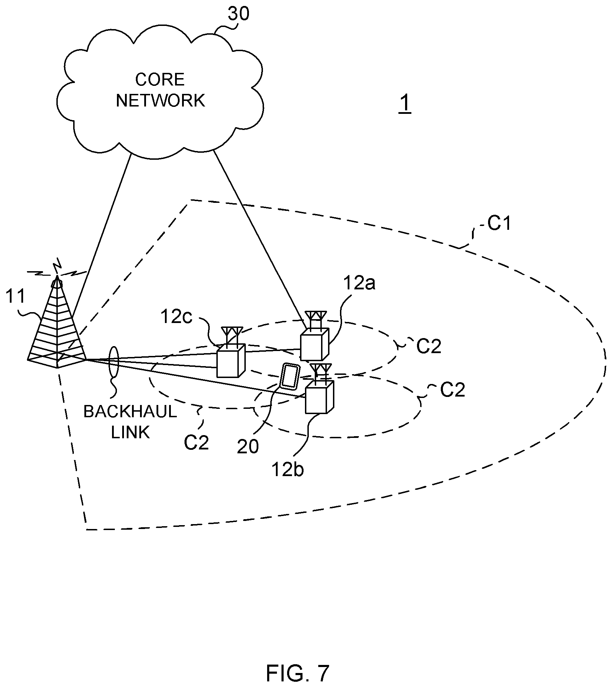

FIG. 7 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are each narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

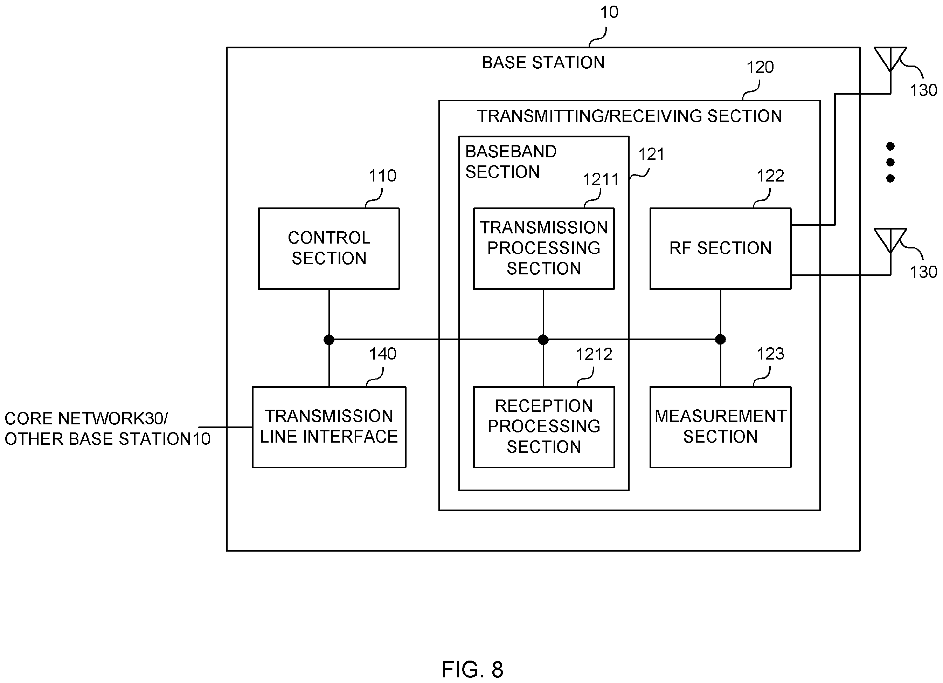

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a potential cell switch command indicating there is a possibility for cell switch to be performed. The transmitting/receiving section 120 may transmit the potential cell switch command after completion of downlink (DL) synchronization of the target cell, after completion of channel state information (CSI) reporting for the target cell, or after completion of uplink (UL) synchronization of the target cell.

The transmitting/receiving section 120 may receive a potential cell switch command indicating there is a possibility for cell switch to be performed. The transmitting/receiving section 120 may receive the potential cell switch command after completion of uplink (UL) synchronization of the target cell, after completion of channel state information (CSI) reporting for the target cell, or after transmission of specific radio resource control (RRC) signaling.

The control section 110 may switch a serving cell to a target cell indicated in the potential cell switch command.

### (User Terminal)

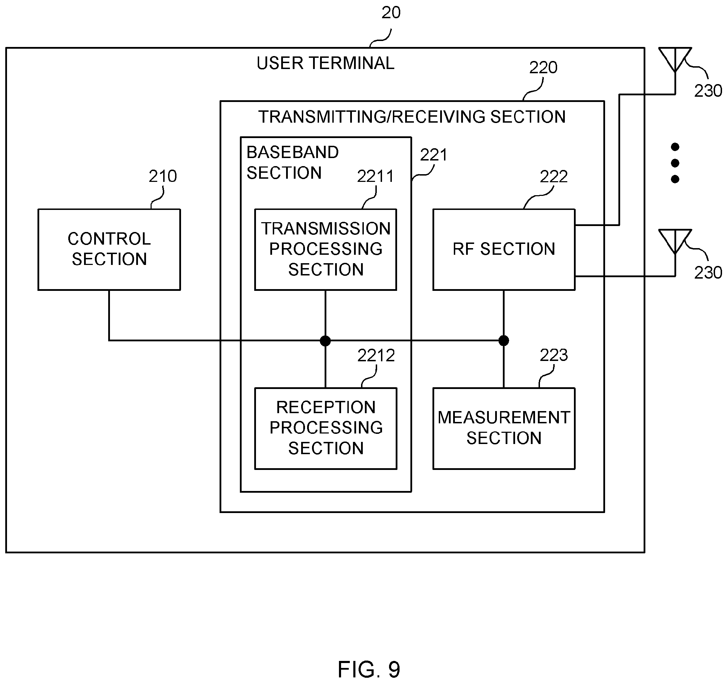

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a potential cell switch command indicating there is a possibility for cell switch to be performed. The transmitting/receiving section 220 may receive the potential cell switch command after completion of downlink (DL) synchronization of the target cell, after completion of channel state information (CSI) reporting for the target cell, or after completion of uplink (UL) synchronization of the target cell.

The transmitting/receiving section 220 may transmit a potential cell switch command indicating there is a possibility for cell switch to be performed. The transmitting/receiving section 220 may transmit the potential cell switch command after completion of uplink (UL) synchronization of the target cell, after completion of channel state information (CSI) reporting for the target cell, or after reception of specific radio resource control (RRC) signaling.

The control section 210 may switch a serving cell to a target cell indicated in the potential cell switch command.

The control section 210 may switch the serving cell to the target cell in a case where a timer corresponding to the potential cell switch expires.

The control section 210 may decide not to perform cell switch in a case where a specific signal indicating cancellation of tential cell switch is received or where a specific event occurs.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

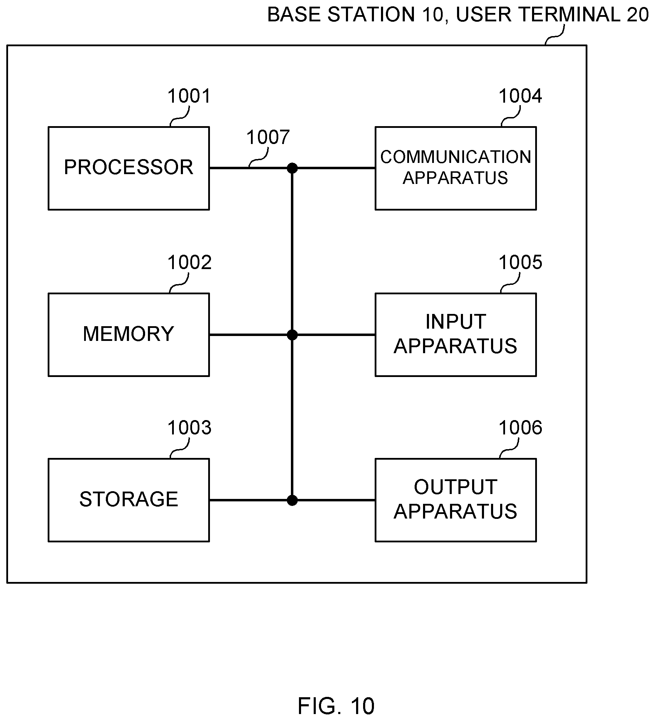

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station" a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

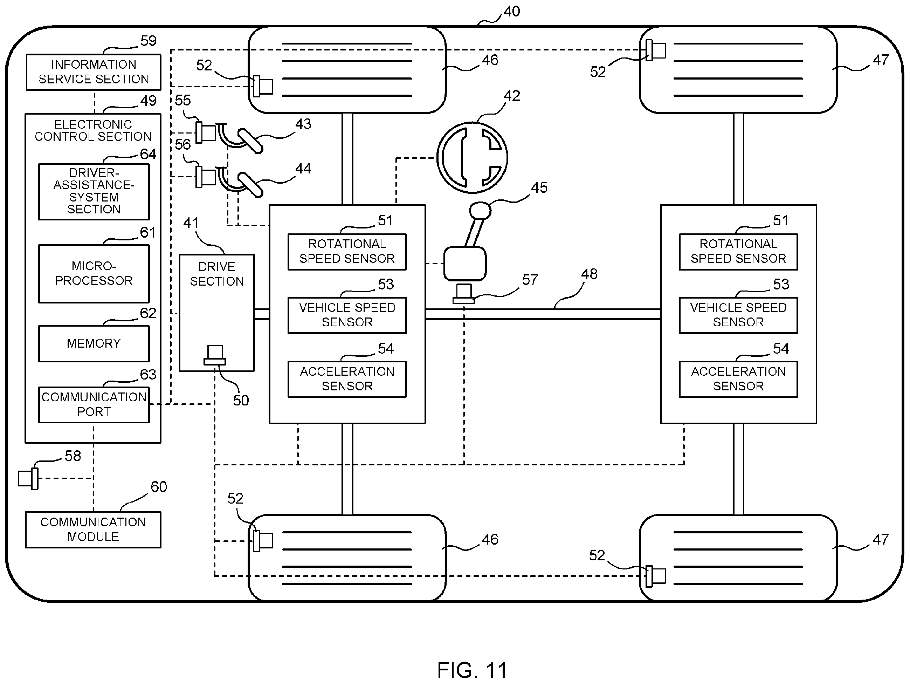

FIG. 11 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a transmitting section that transmits a potential cell switch command indicating there is a possibility for cell switch to be performed; and
a control section that switches a serving cell to a target cell indicated in the potential cell switch command.

2. The terminal according to claim 1, wherein
the transmitting section transmits the potential cell switch command after completion of uplink (UL) synchronization of the target cell, after completion of channel state information (CSI) reporting for the target cell, or after reception of specific radio resource control (RRC) signaling.

3. The terminal according to claim 1, wherein
the control section switches the serving cell to the target cell in a case where a timer corresponding to the potential cell switch expires.

4. The terminal according to claim 1, wherein
the control section decides not to perform cell switch in a case where a specific signal indicating cancellation of potential cell switch is received or where a specific event occurs.

5. A radio communication method for a terminal, the radio communication method comprising:
transmitting a potential cell switch command indicating there is a possibility for cell switch to be performed; and
switching a serving cell to a target cell indicated in the potential cell switch command.

6. A base station comprising:
a receiving section that receives a potential cell switch command indicating there is a possibility for cell switch to be performed; and
a control section that switches a serving cell to a target cell indicated in the potential cell switch command.
